## Europäisches Patentamt
## European Patent Office
## Office européen des brevets

(19)

(11) Veröffentlichungsnummer: **0 167 786**
A2

# (12) EUROPÄISCHE PATENTANMELDUNG

(21) Anmeldenummer: 85106705.8

(51) Int. Cl.⁴: **A 01 B 33/02**

(22) Anmeldetag: 31.05.85

(30) Priorität: 12.07.84 DE 3425605

(43) Veröffentlichungstag der Anmeldung:
15.01.86 Patentblatt 86/3

(84) Benannte Vertragsstaaten:
AT BE CH DE FR GB IT LI NL

(71) Anmelder: Maschinenfabrik Bermatingen GmbH & Co.
Kesselbachstrasse 4
D-7775 Bermatingen(DE)

(72) Erfinder: Fleck, Alfons
Kesselbachstrasse 6
D-7775 Bermatingen(DE)

(74) Vertreter: Engelhardt, Guido, Dipl.-Ing.
Montafonstrasse 35 Postfach 1350
D-7990 Friedrichshafen 1(DE)

(54) Bodenbearbeitungsmaschine.

(57) Bei einer Bodenbearbeitungsmaschine (1) mit zwei oder mehreren in einem verfahrbaren Tragrahmen (11) gehaltenen, jeweils um eine horizontal verlaufende Achse antreibbaren Trägerwelle (21), an denen Bodenbearbeitungswerkzeuge (22) angebracht sind, sind die Trägerwellen (21) entgegen der Fahrtrichtung (Pfeil 3) der Bodenbearbeitungsmaschine (1) unabhängig voneinander verschwenkbar in dem Tragrahmen (11) pendelnd aufgehängt.

Durch diese Ausgestaltung kann nicht nur die Höhenlage der Bodenbearbeitungswerkzeuge (22) leicht und in kurzer Zeit z. B. zur Veränderung der Schnitthöhe auf die jeweiligen Gegebenheiten eingestellt werden, sondern vor allem wird erreicht, daß sich die Trägerwellen (21) einer Bodenbearbeitungsmaschine (1) unabhängig voneinander selbsttätig an veränderbare Betriebsbedingungen anpassen, so daß Verstopfungen und dadurch bedingte Störungen nahezu ausgeschlossen sind.

./...

EP 0 167 786 A2

**DIPL.-ING. GUIDO ENGELHARDT PATENTANWALT** 0167786

**7990 Friedrichshafen**

Maschinenfabrik Bermatingen
GmbH & Co.

7775 Bermatingen

Bodenbearbeitungsmaschine

Die Erfindung bezieht sich auf eine Bodenbearbeitungsmaschine
mit einer oder mehreren in einem verfahrbaren Tragrahmen
gehaltenen, jeweils um eine horizontal verlaufende Achse
antreibbare Trägerwellen, an denen vorzugsweise in Form von
verschwenkbar gelagerten Schlegeln ausgebildete Bodenbearbeitungswerkzeuge angebracht sind.

Mulchgeräte dieser Art sind in zahlreichen unterschiedlichen
Ausgestaltungen bekannt und haben sich in der Praxis auch
gut bewährt. Die Lagerungen der die Schlegel tragenden Wellen
sind hierbei aber starr mit dem Tragrahmen verbunden, so daß
eine Höhenverstellung der Arbeitswerkzeuge nur zu bewerkstelligen ist, indem die Höhenlage des Tragrahmens verändert
wird. Dies ist mitunter sehr zeit- und arbeitsaufwendig, eine
Schnitthöhenverstellung wird daher oftmals, obwohl dies angezeigt wäre, nicht vorgenommen. Des weiteren können beim
Mähen von hohem Gras, da der Schwenkbereich der einzelnen
Schlegel gering ist und das Mähgut somit nicht ausreichend
abgeführt werden kann, Verstopfungen auftreten. Die

./.

Antriebsleistung derartiger Mulchgeräte muß daher, um einen Stillstand der Schlegelwelle nach Möglichkeit zu vermeiden, groß gewählt werden, Betriebsstörungen sind aber dennoch oftmals nicht auszuschließen.

Aufgabe der Erfindung ist es demnach, eine Bodenbearbeitungsmaschine der vorgenannten Gattung in der Weise zu verbessern, daß nicht nur die Lage der Bodenbearbeitungswerkzeuge leicht und in kurzer Zeit auf die jeweiligen Gegebenheiten einzustellen ist und somit z. B. die Schnitthöhe verändert werden kann, sondern vor allem soll auch erreicht werden, daß sich die Trägerwellen einer Maschine unabhängig voneinander selbsttätig an veränderte Betriebsbedingungen anpassen, so daß Verstopfungen und dadurch bedingte Störungen, und zwar auch beim Mähen von hohem Gras, nahezu ausgeschlossen sind. Der dazu erforderliche Bauaufwand soll gering gehalten werden, dennoch soll eine hohe Betriebssicherheit gewährleistet sein.

Gemäß der Erfindung wird dies dadurch erreicht, daß die Trägerwellen entgegen der Fahrtrichtung der Bodenbearbeitungsmaschine unabhängig voneinander verschwenkbar in dem Tragrahmen pendelnd aufgehängt sind.

Zur pendelnden Aufhängung der Trägerwellen können in einfacher Ausgestaltung diese tragende vorzugsweise in deren beiden Endbereichen angeordnete Stützplatten oder Hebel vorgesehen werden, die drehbar auf einer jeweils zugeordneten an dem Tragrahmen abgestützten Welle gelagert sind.

./.

Damit Beschädigungen der Bodenbearbeitungswerkzeuge durch Hindernisse vermieden werden, ist es ferner angebracht, den verschwenkbaren Stützplatten einer Trägerwelle ein oder mehrere in Fahrtrichtung vor dieser an den Stützplatten und/oder an Querholmen angebrachte Tasträder vorzugsweise in Form eines Scheibensech zuzuordnen. Die Trägerwellen werden somit zwangläufig gesteuert und z. B. beim Überfahren eines Baumstammes hochgeschwenkt, ohne daß im Boden Spuren entstehen.

Analog dazu können den verschwenkbaren Stützplatten einer Trägerwelle auch ein oder mehrere in Fahrtrichtung hinter dieser an den Stützplatten und/oder an Querholmen angebrachte Piloträder oder eine Pilotwalze zugeordnet werden, durch die der Boden abgestastet und die Trägerwellen somit entsprechend der Bodenformation zwangläufig verschwenkt werden.

Des weiteren ist es zur Erhöhung der Stabilität angebracht, die Stützplatten einer Trägerwelle durch einen oder mehrere vertikal über dieser angeordnete durchgehende Querholme starr miteinander zu verbinden.

Ferner sollte, um ein Abschleudern des Mähgutes zu verhindern, vertikal über der Trägerwelle jeweils eine vorzugsweise zwischen zwei Querholmen angeordnete durchgehende Abdeckung vorgesehen sein, wobei die Trägerwellen zusätzlich auch mit einem diese jeweils zumindest teilweise, vorzugsweise im unteren Bereich, umgebender beispielsweise durch mit seitlichem Abstand zueinander angeordnete gebogene Stäben oder dgl. gebildeten Schutzkorb ausgestattet sein können. Außerdem kann den Träger-

./.

wellen ein vorzugsweise an deren Abdeckung angebrachtes Gegenmesser oder ein Abstreifer zugeordnet werden.

Um die Trägerwellen in einfacher Weise antreiben zu können, sollte eine der zur verschwenkbaren Lagerung der Stützplatten vorgesehene Welle einer Trägerwelle unmittelbar oder über Zwischenglieder mit einem Antriebsglied in Verbindung stehen und über einen seitlich neben einer Stützplatte angeordneten Riementrieb oder dgl. mit der Trägerwelle trieblich verbunden sein, wobei die Antriebswelle an dem Tragrahmen und die dieser zugeordnete Stützplatte auf der Antriebswelle drehbar gelagert sein können.

Um die Gewichtskraft der verschwenkbaren Bauteile auszugleichen, so daß die Trägerwellen leicht selbsttätig zumindest über einen Teilbereich höhenverschwenkbar sind, ist es nach einer Weiterbildung sehr vorteilhaft, diese jeweils mittels einer in Schwenkrichtung wirksamen Zugfeder an dem Tragrahmen federnd aufzuhängen. Bereits bei geringen Anhäufungen von Mähgut verändern die Trägerwellen somit kurzfristig ihre Lage, das Mähgut kann demnach problemlos abgeführt werden.

Zur Fixierung der Stützplatten einer Trägerwelle in einer vorgegebenen Schwenkstellung kann eine an dem Tragrahmen angelenkte Kette, eine Verstellspindel oder dgl. vorgesehen werden, mittels der die Trägerwelle in Schwenkrichtung nachgiebig aufgehängt ist. Auf diese Weise ist es leicht möglich, die Schnitthöhe zu verändern.

./.

0167786

Die zur Entlastung der verschwenkbaren Bauteile vorgesehene Druckfeder sowie die eine Schwenkstellung arretierende Kette oder die Verstellspindel sollten etwa mittig zur Trägerwelle an dem Tragrahmen und an einem Querholm angelenkt sein.

Damit bei bestimmten Arbeiten, wie z. B. Auffräsen eines Bodens, die Bodenbearbeitungswerkzeuge nicht nur mit der Gewichtskraft der verschwenkbaren Bauteile, sondern zusätzlich mit einer vorgegebenen Kraft wirksam sind und die Trägerwelle nicht durch geringen Widerstand verschwenkt wird, ist es des weiteren sehr vorteilhaft, die Trägerwelle in einer vorgegebenen Schwenkstellung der Stützplatten vorgespannt zu halten.

Dies kann in der Weise bewerkstelligt werden, indem eine oder mehrere auf die Trägerwelle oder die verschwenkbaren Bauteile einwirkende an dem Tragrahmen abgestützte Druckfedern vorgesehen oder an den Stützplatten und/oder den Querholmen und/oder der Abdeckung mit Abstand zur Schwenkachse der Stützplatten Gewichte angebracht werden.

Der Tragrahmen sollte ferner über vorzugsweise drei höhenverstellbar angeordnete Laufräder am Boden abgestützt sein.

Angebracht ist es des weiteren, in dem Tragrahmen zwei oder mehrere Trägerwellen achsparallel zueinander und gegeneinander seitlich versetzt sich in dem Randbereich überdeckend anzuordnen.

Die gemäß der Erfindung ausgebildete Bodenbearbeitungsmaschine ist nicht nur einfach in der konstruktiven Ausgestaltung und somit ohne Schwierigkeiten auch in wirtschaftlicher Weise herstellbar, sondern auch leicht zu handhaben.

./.

Vor allem aber ist es möglich, in kurzer Zeit und ohne
großen Arbeitsaufwand die Lage der Bodenbearbeitungswerkzeuge gegenüber dem zu bearbeitenden Boden zu verändern,
außerdem sind Verstopfungen und dadurch bedingte Betriebsstörungen nahezu ausgeschlossen. Werden nämlich die Trägerwellen einer Bodenbearbeitungsmaschine entgegen der Fahrtrichtung unabhängig voneinander verschwenkbar in dem Tragrahmen aufgehängt, so können sich die Bodenbearbeitungswerkzeuge selbsttätig den jeweiligen Gegebenheiten anpassen,
indem die Trägerwellen durch erhöhten Widerstand hochgeschwenkt werden. Die Gewichtskraft der verschwenkbaren Teile
kann dabei durch an diesen angreifende Zugfedern ausgeglichen werden, so daß mitunter der zum Verschwenken erforderliche Kraftaufwand äußerst gering ist und die Trägerwellen somit bereits bei geringen Anhäufungen von Mähgut
ausweichen.

Die Antriebsleistung der gemäß der Erfindung ausgebildeten
Bodenbearbeitungsmaschine kann demnach weitaus geringer
gehalten werden als bei den bekannten Ausgestaltungen, dennoch
ist, da Verstopfungen nahezu ausgeschlossen sind, stets, und
zwar auch beim Mähen von hohem Gras auf Flugplätzen stets
eine hohe Betriebssicherheit gegeben. Auch ist insbesondere,
wie dies bei derartigen Arbeiten mitunter erforderlich ist,
eine bestimmte Schnitthöhe leicht einstellbar und eine gleichmäßige Ablage des Mähgutes ist ohne weiteres zu bewerkstelligen.

In der Zeichnung ist ein Ausführungsbeispiel der gemäß der
Erfindung ausgebildeten Bodenbearbeitungsmaschine dargestellt,
das nachfolgend im einzelnen erläutert ist. Hierbei zeigen:

Fig. 1    die Bodenbearbeitungsmaschine in einem achssenkrechten Schnitt gemäß der Linie II - II
          in Fig. 2
          und

./.

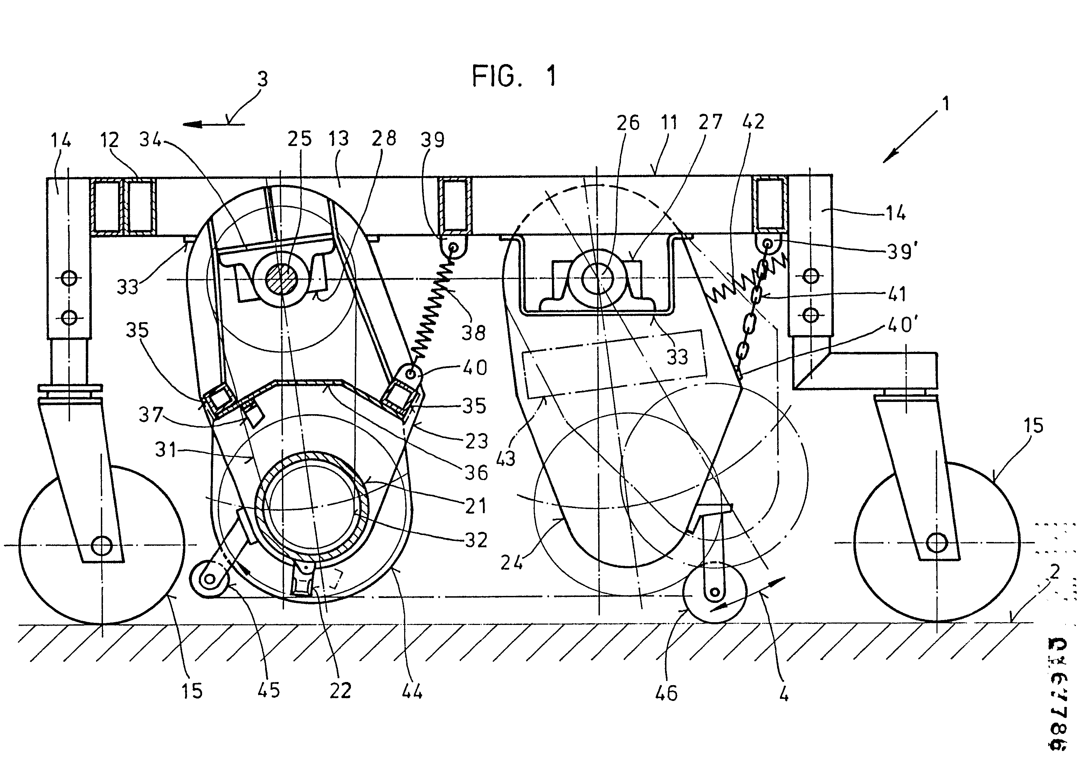

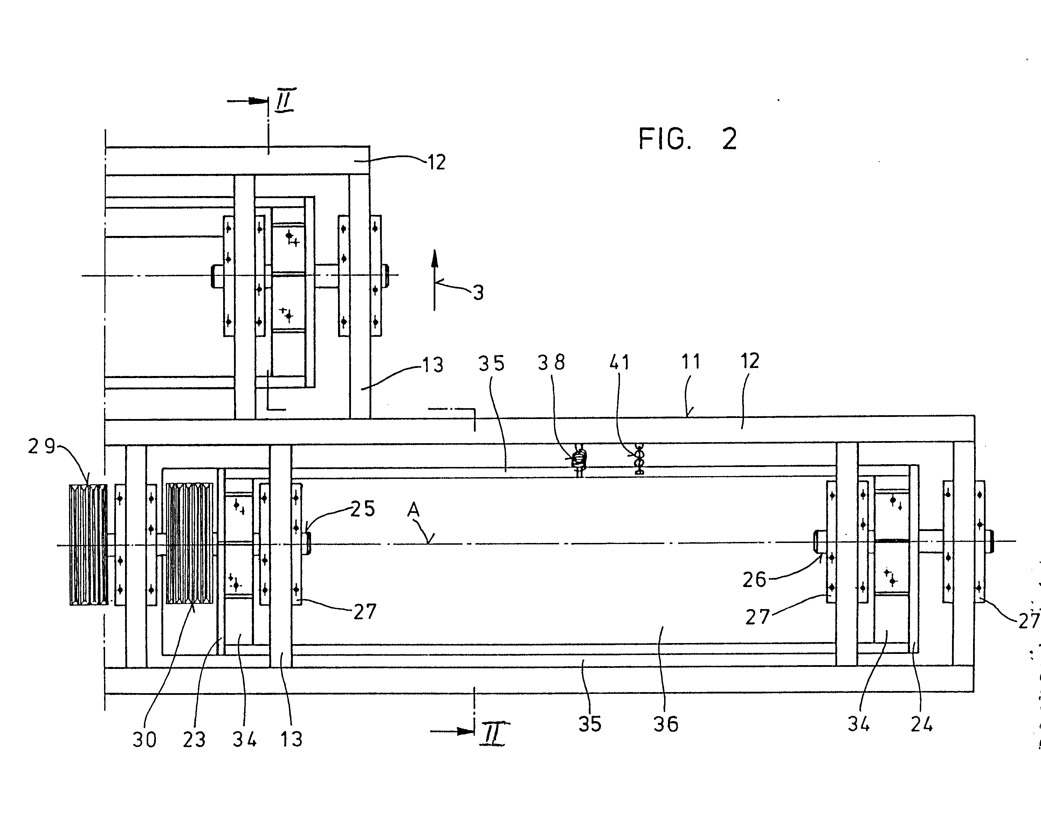

Fig. 2    einen Teil der Bodenbearbeitungsmaschine
nach Fig. 1, in Draufsicht, ohne Lauf- und
Taststräder.

Die in den Fig. 1 und 2 dargestellte und mit 1 bezeichnete in Richtung des Pfeiles 3 verfahrbare Bodenbearbeitungsmaschine ist als Mulchgerät ausgebildet und dient zum Mähen von auf dem Boden 2 wachsendem Gras. In einem Tragrahmen 11, der aus Querholmen 12 und Längsholmen 13 gebildet ist, sind hierbei Trägerwellen 21 angeordnet, die mit Bodenbearbeitungswerkzeugen 22 in Form von verschwenkbaren Schlegeln, wie dies strichpunktiert eingezeichnet ist, bestückt sind. Mittels z. B. dreier Laufräder 15, die in an den Querholmen 12 angeschweißten Stützen 14 höhenverstellbar gehalten sind, ist der Tragrahmen 11 auf dem Boden 2 abgestützt.

Damit die Schnitthöhe auf einfache Weise eingestellt werden kann und auch beim Mähen von hohem Gras keine Verstopfungen auftreten können, sind die Trägerwellen 21 in Richtung des Pfeiles 4 unabhängig voneinander verschwenkbar in dem Tragrahmen 11 aufgehängt. Dazu sind Stützplatten 23 und 24 vorgesehen, in denen jeweils eine Trägerwelle 21 an ihren Enden drehbar gelagert ist, und die Stützplatten 23 und 24 sind auf Wellen 25 und 26 verschwenkbar gehalten, die an dem Tragrahmen 1 abgestützt sind. Die Welle 25 dient bei dem gezeigten Ausführungsbeispiel als Antriebswelle, auf der zwei Riemenscheiben 29 und 3o angeordnet sind. Mittels eines nicht dargestellten über die Riemenscheibe 29 geführten Riementriebes ist die Antriebswelle 25 mit einem Antriebsglied verbunden,mittels eines weiteren über die Riemenscheibe 3o und eine an der Trägerwelle 21 angebrachten Riemenscheibe 32 geführten Riementriebes 31 steht die Trägerwelle 21 mit der Antriebswelle 25 in Triebverbindung.

./.

Auch bei Schwenkbewegungen der Stützplatten 23 und 24 wird somit der Antrieb der Trägerwelle 21 nicht beeinflußt.

Die Antriebswelle 25 und auch die Welle 26 sind in Lagern 27 drehbar gelagert, die über Bügel 33 an den Längsholmen 13 abgestützt sind. Die Stützplatten 23 und 24 sind dagegen auf den Wellen 25 und 26 verschwenkbar mittels Lager 28 gehalten, die über Verstärkungsbleche 34 abgestützt sind.

Zur Erhöhung der Stabilität sind die Stützplatten 23 und 24 durch zwei über der Trägerwelle 21 angeordnete Querholme 35 verbunden, außerdem sind der Trägerwelle 21 eine Abdeckung 36 sowie ein Schutzkorb 44, der durch mit seitlichem Abstand zueinander angebrachte gebogene Stäbe gebildet sein kann, zugeordnet. Des weiteren ist an der Abdeckung 36 ein Gegenmesser 37, damit an den Werkzeugen 22 evtl. hängengebliebenes Gut abgestreift wird, angebracht.

Um die Gewichtskraft der um die Achse A verschwenkbaren Teile auszugleichen, so daß die Trägerwellen 21 auch bei geringem Widerstand in Richtung des Pfeiles 4 selbsttätig hochschwenken können, sind diese, wie dies in dem linken Teil der Fig. 1 dargestellt ist, mittels einer Zugfeder 38 aufgehängt. Die Zugfeder 38 ist hierbei etwa mittig zu der Trägerwelle 21 angeordnet und in an dem Tragrahmen 11 sowie einem der Querholme 35 befestigten Öse 39 und 4o gehalten.

Wird anstelle der Zugfeder 38, oder zusätzlich, wie dies im rechten Teil der Fig. 1 gezeigt ist, eine Kette 41 in die Ösen 39' und 4o' eingehängt, kann die Trägerwelle 21 in einer bestimmten Schräglage fixiert werden, so daß durch Längenänderungen der Kette 41 die gewünschte Schnitthöhe leicht einstellbar ist, die Trägerwelle 21 aber dennoch nach oben ausweichen kann. Und um die Bodenbearbeitungswerkzeuge 22 außer durch

./.

die Gewichtskraft der verschwenkbaren Teile mit einer gewissen Vorspannung auf den Boden 2 einwirken zu lassen, können Druckfedern 42, die sich an dem Tragrahmen 11 und den verschwenkbaren Teilen abstützen, oder beispielsweise an den Stützplatten 23 und 24 angebrachte Gewichte 43 vorgesehen werden.

Die in dem Tragrahmen 11 gehaltenen Trägerwellen 21 sind somit pendelnd aufgehängt, so daß durch Schrägstellung der Stützplatten 23 und 24, wie dies im rechten Teil der Fig. 1 strichpunktiert eingezeichnet ist, leicht die jeweilige Schnitthöhe vorgegeben werden kann. Außerdem können die Trägerwellen 21 bei erhöhten Widerständen unabhängig voneinander selbsttätig nach oben wegschwenken, Verstopfungen sind demnach ausgeschlossen. Und da an den verschwenkbaren Teilen, beispielsweise wie dies in Fig. 1 dargestellt ist, an den Stützplatten 23, 24 und/oder den Holmen 35 mit seitlichem Abstand zueinander auf eine bestimmte Schnitthöhe eingestellte Tasträder 45 und/oder Piloträder 48 angebracht sein können, werden die Trägerwellen 21 beim Überfahren von Hindernissen und/oder in Abhängigkeit von der jeweiligen Bodenformation zwangläufig hochgeschwenkt, Beschädigungen und Betriebsstörungen werden dadurch ebenfalls vermieden.

11. Juli 1984    e-l
A 9818

Maschinenfabrik Bermatingen
GmbH & Co.

7775 Bermatingen

Patentansprüche

1. Bodenbearbeitungsmaschine mit einer oder mehreren in
einem verfahrbaren Tragrahmen gehaltenen, jeweils um
eine horizontal verlaufende Achse antreibbaren Trägerwellen, an denen vorzugsweise in Form von verscchwenkbar gelagerten  Schlegeln ausgebildete Bodenbearbeitungswerkzeuge angebracht sind,

d a d u r c h   g e k e n n z e i c h n e t ,

daß die Trägerwellen (21) entgegen der Fahrtrichtung
(Pfeil 3) der Bodenbearbeitungsmaschine (1) unabhängig
voneinander verschwenkbar in dem Tragrahmen (11)
pendelnd aufgehängt sind.

2. Bodenbearbeitungsmaschine nach Anspruch 1,

d a d u r c h   g e k e n n z e i c h n e t ,

./.

daß zur pendelnden Aufhängung der Trägerwellen (21)
diese tragende vorzugsweise in deren beiden Endbereichen angeordnete Stützplatten (23, 24) oder Hebel
vorgesehen sind, die verschwenkbar auf einer jeweils
zugeordneten an dem Tragrahmen (11) abgestützten
Welle (25, 26) gelagert sind.

3. Bodenbearbeitungsmaschine nach Anspruch 1 oder 2,

d a d u r c h   g e k e n n z e i c h n e t ,

daß den verschwenkbaren Stützplatten (23, 24) einer
Trägerwelle (21) ein oder mehrere in Fahrtrichtung vor
dieser an den Stützplatten (23, 24) und/oder an Querholmen (35) angebrachte Taster (45) vorzugsweise in
Form eines Scheibensech zugeordnet sind.

4. Bodenbearbeitungsmaschine nach einem  oder mehreren
der Ansprüche 1 bis 3,

d a d u r c h   g e k e n n z e i c h n e t ,

daß den verschwenkbaren Stützplatten (23, 24) einer
Trägerwelle (21) ein oder mehrere in Fahrtrichtung hinter
dieser an den Stützplatten (23, 24) und/oder an Querholmen (35) angebrachte Piloträder (46) oder eine Pilotwalze zugeordnet sind.

5. Bodenbearbeitungsmaschine nach einem oder mehreren
der Ansprüche 1 bis 4,

d a d u r c h   g e k e n n z e i c h n e t ,

./.

daß die Stützplatten (23, 24) einer Trägerwelle (21) durch einen oder mehrere vertikal über dieser angeordnete durchgehende Querholme (35) starr miteinander verbunden sind.

6. Bodenbearbeitungsmaschine nach einem oder mehreren der Ansprüche 1 bis 5,

d a d u r c h   g e k e n n z e i c h n e t ,

daß vertikal über der Trägerwelle (21) jeweils eine vorzugsweise zwischen zwei Querholmen (35) angeordnete durchgehende Abdeckung (36) angebracht ist.

7. Bodenbearbeitungsmaschine nach einem oder mehreren der Ansprüche 1 bis 6,

d a d u r c h   g e k e n n z e i c h n e t ,

daß die Trägerwellen (21) mit einem diese jeweils zumindest teilweise, vorzugsweise im unteren Bereich, umgebenden beispielsweise durch mit seitlichem Abstand zueinander angeordnete gebogene Stäben oder dgl. gebildeten Schutzkorb (44) versehen ist.

8. Bodenbearbeitungsmaschine nach einem oder mehreren der Ansprüche 1 bis 6,

d a d u r c h   g e k e n n z e i c h n e t ,

daß den Trägerwellen (21) jeweils ein vorzugsweise an deren Abdeckung (35) angebrachtes Gegenmesser (37) oder ein Abstreifer zugeordnet sind.

./.

9. Bodenbearbeitungsmaschine nach einem oder mehreren der Ansprüche 1 bis 8,

d a d u r c h   g e k e n n z e i c h n e t ,

daß eine der zur verschwenkbaren Lagerung der Stützplatten (23, 24) vorgesehene Welle (25) einer Trägerwelle (21) unmittelbar oder über Zwischenglieder (Riemenscheibe 29) mit einem Antriebsglied in Verbindung steht und über einen seitlich neben einer Stützplatte (23) angeordneten Riementrieb (31) oder dgl. mit der Trägerwelle (21) trieblich verbunden ist.

10. Bodenbearbeitungsmaschine nach Anspruch 9,

d a d u r c h   g e k e n n z e i c h n e t ,

daß die Antriebswelle (25) an dem Tragrahmen (11) und die dieser zugeordneten Stützplatten (23) auf der Antriebswelle (25) drehbar gelagert sind.

11. Bodenbearbeitungsmaschine nach einem oder mehreren der Ansprüche 1 bis 10,

d a d u r c h   g e k e n n z e i c h n e t ,

daß die Trägerwellen (21) jeweils mittels einer in Schwenkrichtung (Pfeil 4) wirksamen Zugfeder (38) an dem Tragrahmen (11) federnd aufgehängt sind.

12. Bodenbearbeitungsmaschine nach einem oder mehreren der Ansprüche 1 bis 11,

d a d u r c h   g e k e n n z e i c h n e t ,

daß zur Fixierung der Stützplatten (23, 24) einer Trägerwelle (21) in einer vorgegebenen Schwenkstellung eine an dem Tragrahmen (11) angelenkte Kette (41), eine Verstellspindel oder dgl. vorgesehen ist, mittels der die Trägerwelle (21) in Schwenkrichtung nachgiebig aufgehängt ist.

13. Bodenbearbeitungsmaschine nach Anspruch 11 oder 12,

d a d u r c h   g e k e n n z e i c h n e t ,

daß die Zugfeder (38), die Kette (41) oder die Verstellspindel etwa mittig zur Trägerwelle (21) an dem Tragrahmen (11) und an einem Querholm (35) angelenkt sind.

14. Bodenbearbeitungsmaschine nach einem oder mehreren der Ansprüche 1 bis 1o,

d a d u r c h   g e k e n n z e i c h n e t ,

daß die Trägerwelle (21) in einer vorgegebenen Schwenkstellung der Stützplatten (23, 24) vorgespannt gehalten ist.

15. Bodenbearbeitungsmaschine nach Anspruch 14,

d a d u r c h   g e k e n n z e i c h n e t ,

daß zur Vorspannung der verschwenkbaren Trägerwelle (21) eine oder mehrere auf diese oder die verschwenkbaren Bauteile einwirkende an dem Tragrahmen (11) abgestützte Druckfedern (42) vorgesehen sind.

./.

16. Bodenbearbeitungsmaschine nach Anspruch 15,

    d a d u r c h   g e k e n n z e i c h n e t ,

    daß zur Vorspannung der verschwenkbaren Trägerwelle
    (21) an den Stützplatten (23, 24) und/oder den Querholmen (35) und/oder der Abdeckung (36) mit Abstand
    zur Schwenkachse (A) der Stützplatten (23, 24) vorzugs-
    weise verstellbare und/oder auswechselbare Gewichte (43)
    angebracht sind.

17. Bodenbearbeitungsmaschine nach einem oder mehreren
    der Ansprüche 1 bis 16,

    d a d u r c h   g e k e n n z e i c h n e t ,

    daß der Tragrahmen (11) über vorzugsweise drei höhenverstellbar angeordnete Laufräder (15) am Boden (2)
    abgestützt ist.

18. Bodenbearbeitungsmaschine nach einem oder mehreren
    der Ansprüche 1 bis 17,

    d a d u r c h   g e k e n n z e i c h n e t ,

    daß zwei oder mehrere Trägerwellen (21) achsparallel
    zueinander und gegeneinander seitlich versetzt sich in
    dem Randbereich überdeckend in dem Tragrahmen (11)
    angeordnet sind.

9. Juli 1984      e-1
A 9818

FIG. 1

1/2

JULI 84

A 9818

FIG. 2

0167786